# EUROPÄISCHE PATENTANMELDUNG

(11) **EP 1 430 778 A1**
(43) Veröffentlichungstag der Anmeldung: **23.06.2004**
(21) Anmeldenummer: 02028239.8
(22) Anmeldetag: 16.12.2002
(51) Int. Cl.: A22C 11/00

(54) **Verfahren und Vorrichtung zum Entfernen einer einen Gegenstand umschliessenden Hülle**

(71) Anmelder: Freiberger Lebensmittel GmbH & Co. Produktions- und Vertriebs KG, 13439 Berlin (DE); Industrie- und Schiffs- Service R. Gradewald oHG, 22880 Wedel (DE)
(72) Erfinder: Dolski, Eberhard, 14476 Seeburg (DE); Gradewald, Reinhold, 22880 Wedel (DE)
(74) Vertreter: Dimmerling, Heinz, Dipl.-Ing.

(57) **Zusammenfassung**

Ein Verfahren zum Entfernen einer einen Gegenstand 1 umschließenden Hülle 1a, insbesondere zum Entfernen einer Pelle 1a von einer Salami 1, ist dadurch gekennzeichnet, daß der umhüllte Gegenstand 1 vor dem Entfernen der Hülle 1a mit Ultraschall behandelt wird.

Des weiteren ist eine Vorrichtung zum Entfernen einer einen Gegenstand 1 umschließenden Hülle 1a, insbesondere zum Entfernen einer Pelle 1a von einer Salami 1, dadurch gekennzeichnet, daß ein Element 5 zum Einbringen eines Mediums zwischen den umhüllten Gegenstand 1 und der Hülle 1a vorhanden ist.

## Beschreibung

Die Erfindung betrifft ein Verfahren nach dem Oberbegriff des Anspruchs 1 sowie eine Vorrichtung nach dem Oberbegriff des Anspruchs 6, zum Entfernen einer einen Gegenstand umschließenden Hülle, insbesondere zum Entfernen einer Pelle von einer Salami.

Häufig stellt sich das Problem, einen umhüllten Gegenstand von seiner Hülle zu befreien. Dies ist um so schwieriger, je enger die Hülle den Gegenstand umschließt und je fester die Hülle an dem Gegenstand haftet.

Insbesondere tritt das Problem dann zutage, wenn man die Pelle von einer Salami entfernen möchte. Denn gerade die Pelle einer Salami ist sehr fest mit der Salami verbunden.

Zum manuellen Entfernen der Pelle von der Salami werden zunächst die beiden Wurstenden abgeschnitten und dann die Pelle längs mit einem Messer aufgeschnitten. Anschließend wird die Pelle mit dem Messer gegriffen und abgezogen. Da die Pelle sehr fest mit der Salami verbunden ist, läßt sie sich nur sehr schwer abziehen. Hierdurch gestaltet sich das Entfernen einer Pelle von einer Salami als körperlich schwere und stupide Arbeit. Durch die beim Abziehen der Pelle erforderliche Kraft besteht des weiteren die Gefahr, daß man abrutscht und sich mit dem Messer verletzt.

Ungeachtet dessen lassen sich beim manuellen Abpellen einer Salami die erforderlichen Hygienebedingungen nur sehr schwer einhalten. Des weiteren ist für das manuelle Abpellen einer Salami ein sehr hoher Personaleinsatz erforderlich.

Es ist Aufgabe der Erfindung, ein Verfahren zur Verfügung zu stellen, mittels welchem das Entfernen einer einen Gegenstand umschließenden Hülle, insbesondere das Entfernen einer Pelle von einer Salami wesentlich vereinfacht wird. Des weiteren ist es Aufgabe der Erfindung, eine Vorrichtung anzugeben, mittels welcher eine einen Gegenstand umschließende Hülle, insbesondere eine Pelle von einer Salami auf einfache Weise entfernt werden kann.

Die Lösung dieser Aufgabe ergibt sich aus den Merkmalen des kennzeichnenden Teils der Ansprüche 1 und 6. Vorteilhafte Weiterbildungen der Erfindung ergeben sich aus den Unteransprüchen.

Gemäß der Erfindung ist ein Verfahren zum Entfernen einer einen Gegenstand umschließenden Hülle, insbesondere zum Entfernen einer Pelle von einer Salami, dadurch gekennzeichnet, daß der umhüllte Gegenstand vor dem Entfernen der Hülle mit Ultraschall behandelt wird.

Des weiteren ist gemäß der Erfindung eine Vorrichtung zum Entfernen einer einen Gegenstand umschließenden Hülle, insbesondere zum Entfernen einer Pelle von einer Salami, dadurch gekennzeichnet, daß eine Anordnung vorhanden ist, mittels der der umhüllte Gegenstand vor dem Entfernen der Hülle mit Ultraschall behandelt wird.

Dadurch, daß bei dem erfindungsgemäßen Verfahren beziehungsweise der erfindungsgemäßen Vorrichtung der umhüllte Gegenstand vor dem Entfernen der Hülle mit Ultraschall behandelt wird, löst sich die Hülle von dem Gegenstand. Da die Hülle nicht mehr an dem Gegenstand haftet, läßt sie sich sehr leicht von dem Gegenstand entfernen. Insbesondere läßt sich die Pelle einer Salami nach einer Behandlung mit Ultraschall sehr leicht von der Salami abziehen. Da kein großer Kraftaufwand mehr erforderlich ist, läßt sich die Salami sehr leicht und schnell entpellen. Des weiteren verringert sich die Gefahr einer Verletzung erheblich.

Die Behandlung mit Ultraschall kann eine Beschallung in Luft oder einem besonderen Gas sein. Als besonders vorteilhaft hat sich jedoch herausgestellt, den umhüllten Gegenstand vor dem Entfernen der Hülle in ein Ultraschallbad zu tauchen. Als Flüssigkeit des Ultraschallbades kann beispielsweise Wasser genommen werden.

Durch das Eintauchen des umhüllten Gegenstands in das Ultraschallbad wird eine sehr intensive Einwirkung des Ultraschalls auf den Gegenstand erreicht, so daß sich die den Gegenstand umschließende Hülle sehr schnell löst. Hierdurch kann die Behandlungszeit herabgesetzt werden. Es hat sich herausgestellt, daß zum Entpellen einer Salami eine Behandlungszeit von etwa 100 Sekunden sehr vorteilhaft ist.

Besonders vorteilhaft ist es, wenn nach der Ultraschallbehandlung zwischen den Gegenstand und der Hülle ein Medium wie beispielsweise ein Gas eingebracht wird. Hierdurch löst sich die Hülle vollständig von dem Gegenstand, so daß sie sich auch auf einfache Weise maschinell entfernen läßt. Das Gas kann Luft oder ein inertes Gas sein. Jedoch könnte als Medium auch eine Flüssigkeit genommen werden.

Zum Einbringen des Mediums zwischen den Gegenstand und der Hülle haben sich Injektionsnadeln als sehr vorteilhaft herausgestellt. Mittels einer Injektionsnadel läßt sich die Hülle regelmäßig auf einfache Weise und zuverlässig durchstechen, wobei an der Einstichstelle nur sehr wenig von dem Medium entweicht, da die Hülle die Injektionsnadel in der Regel sehr dicht umschließt.

Bei der erfindungsgemäßen Vorrichtung hat sich insbesondere ein Element zum Einbringen eines Mediums zwischen den umhüllten Gegenstand und der Hülle als sehr vorteilhaft herausgestellt. Denn hierdurch läßt sich die Hülle von dem umhüllten Gegenstand auf einfache Weise lösen. Sehr vorteilhaft ist es hierbei, wenn das Element zum Einbringen des Mediums zwischen den umhüllten Gegenstand und der Hülle als Injektionsnadel ausgebildet ist, welche wenigstens die Hülle durchstechen kann. Mittels der Injektionsnadel läßt sich auf einfache Weise das Medium zwischen den umhüllten Gegenstand der Hülle bringen.

Sehr vorteilhaft ist auch ein Mantelelement, in das der umhüllte Gegenstand vor dem Einbringen des Mediums unter die Hülle gebracht wird. Denn durch das Mantelelement, wird in vorteilhafter Weise erreicht, daß die Hülle nicht beliebig aufgebläht werden kann, wodurch sie zerplatzen könnte. Dadurch, daß die Wandungen des Hohlraums einen vorbestimmten Abstand zum umhüllten Gegenstand haben, läßt sich die Hülle nur so weit auflasen, bis sie an den Wandungen des Hohlraums anliegt. Durch die Wandungen des Hohlraums kann somit die Form vorgegeben werden, zu welcher die Hülle aufgeblasen werden soll. So kann durch die Form des Hohlraums gezielt der Abstand eingestellt werden, den die Hülle nach dem Aufblasen von dem Gegenstand haben soll. Sofern es erforderlich sein sollte, kann dieser Abstand unterschiedlich groß ausgebildet sein.

Als besonders vorteilhaft hat sich auch eine Ausführungsform der Erfindung herausgestellt, bei der das Mantelelement aus zwei Halbschalen besteht. Hierdurch läßt sich der umhüllte Gegenstand auf einfache Weise sehr leicht und sehr schnell in den Hohlraum verbringen. Dies wirkt sich vorteilhaft auf die Kosten aus.

Sehr vorteilhaft ist eine Ausführungsform der Erfindung, bei der ein Trennelement vorhanden ist, mittels welchem die Hülle durchtrennbar ist. Mittels des Trennelements, welches vorzugsweise als Kreissäge ausgebildet sein kann, läßt sich die aufgeblasene Hülle auf einfache Weise sehr leicht durchtrennen, so daß der Gegenstand aus der Hülle genommen werden kann. Insbesondere läßt sich beim Entpellen einer Salami mittels des Trennelements ein Ende der Salami abschneiden, wodurch sich die Salami auf einfache Weise aus der Pelle nehmen läßt. Ist die Salami beispielsweise an ihrer Reifeschlaufe aufgehängt und wird das der Reifeschlaufe entgegengesetzte Ende der Salami abgetrennt, fällt die Salami nach unten aus der Pelle, wobei die Pelle an der Reifeschlaufe hängenbleibt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung einer Anordnung zur Durchführung des erfindungsgemäßen Verfahrens,
- Figur 2: eine schematische Darstellung einer erfindungsgemäßen Vorrichtung und
- Figur 3: eine schematische Darstellung eines Mantelelements in der Draufsicht.

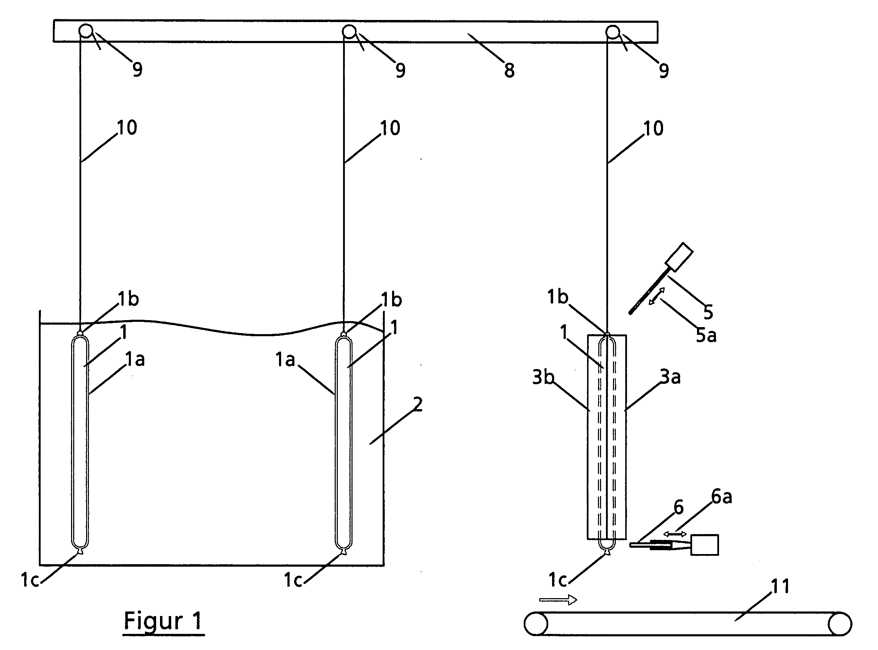

Wie Figur 1 entnommen werden kann, werden Salamis 1, welche an ihrer Reifeschlaufe 1b an einem Seil 10 aufgehängt sind, in ein Ultraschallbad 2 getaucht. Die Salamis 1 sind fest von einer Pelle 1a umhüllt. Das Seil 10 ist an seinem der Salami 1 abgewandten Ende mittels eines Seilzugs 9 an einer Transportschiene 8 befestigt. Mittels des Seilzugs 9 läßt sich die Salami 1 in das Ultraschallbad 2 hineintauchen beziehungsweise aus dem Ultraschallbad 2 herausheben. Der Seilzug weist ein Element mit einem Antrieb auf, durch welches die Salami 1 um ihre Längsachse gedreht werden kann. Durch die Drehung der Salamis 1 um ihre Achse wird eine zuverlässige allseitige Beschallung der Salamis 1 erreicht. Das Ultraschallbad 2 besteht aus einer sterilen Badflüssigkeit. Für die Sterilität der Badflüssigkeit kann gegebenenfalls ein Pumpenkreislauf mit einem Vorratsbehälter sorgen, der die Badflüssigkeit über einen Sterilfilter in ständigem Kreislauf führt. Die Transportschiene 8 kann über dem Ultraschallbad 2 einen meanderförmigen Verlauf haben.

Nachdem die Salamis 1 etwa hundert Sekunden lang in dem Ultraschallbad 2 eingetaucht waren, hat sich die Pelle 1a von der Salami 1 gelöst, so daß sie sich leicht entfernen läßt. Hierzu wird die Salami 1 aus dem Ultraschallbad 2 herausgenommen. Zum automatischen Entpellen wird die Salami 1 mittels der Transportschiene 8 einer Entpellstation zugeführt. Die Entpellstation besteht im wesentlichen aus einem als Injektionsnadel 5 ausgebildeten Element zum Einbringen eines Gases zwischen der Salami 1 und der Hülle 1a. Die Injektionsnadel 5 läßt sich, wie in Figur 1 durch den Pfeil 5a angedeutet, in axialer Richtung verschieben. Hierzu ist sie an einer Halterung 12 befestigt. Die Injektionsnadel 5 ist über die Haltevorrichtung 12 mit einem Schlauch 13 verbunden, welcher an seinem anderen Ende mit einem in der Figur nicht dargestellten Druckbehälter verbunden ist. Der Druck im Behälter beträgt etwa fünf bar, so daß das Gas mit einem Druck von fünf bar durch die Injektionsnadel 5 unter die Pelle 1a der Salami 1 gelangt.

Nachdem die Injektionsnadel 5 die Pelle 1a der Salami 1 durchstochen hat, wird das Gas unter die Pelle 1a der Salami 1 geblasen. Hierdurch bläht sich die Pelle 1a der Salami 1 auf, wodurch sie nicht mehr eng an der Salami 1 anliegt.

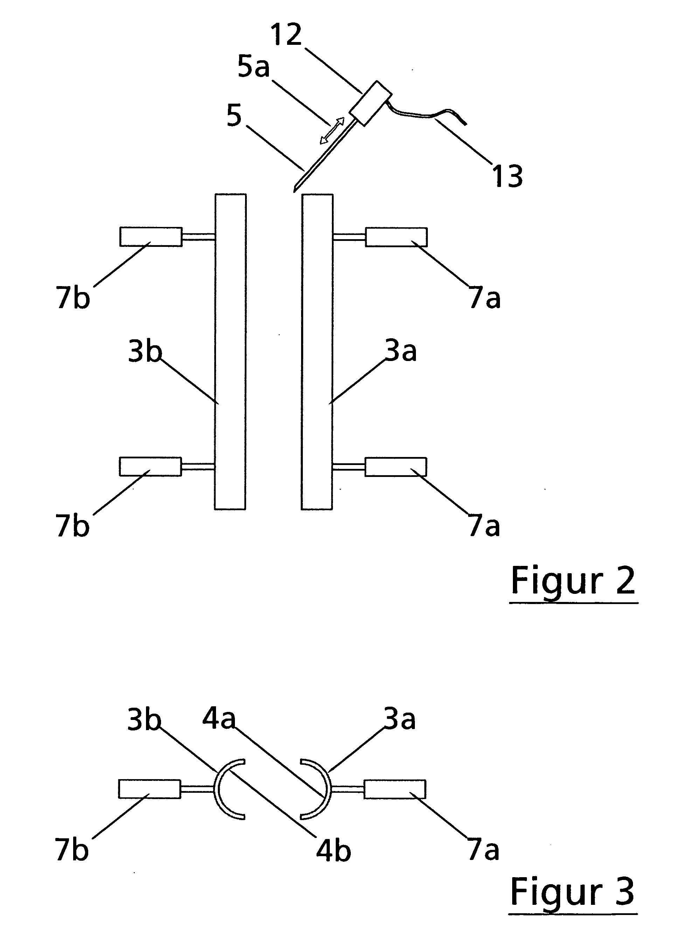

Damit die Pelle 1a der Salami 1 nicht zerplatzt, wird die Salami 1 zuvor in ein zur Entpellstation gehörendes Mantelelement 3a, 3b gebracht. Der Aufbau des Mantelelements 3a, 3b ist in den Figuren 2 und 3 genauer dargestellt.

Wie den Figuren 2 und 3 entnommen werden kann, besteht das Mantelelement 3a, 3b im wesentlichen aus zwei Halbschalen 3a, 3b, welche sich mittels Zylinder 7a, 7b in radialer Richtung aufeinander zu beziehungsweise voneinander weg bewegen lassen. Die Halbschalen 3a, 3b lassen sich somit zu einem zylinderförmigen Rohr zusammenfügen.

Die Abmessungen der Halbschalen 3a, 3b sind so bemessen, daß die Wandungen 4a, 4b der Halbschalen 3a, 3b im zusammengefügten Zustand einen Abstand von etwa einem Zentimeter zur Oberfläche der Salami 1 aufweisen. Die Pelle 1a der Salami 1 läßt sich somit soweit aufblähen, daß sich die Pelle 1a im aufgeblähten Zustand in einem Abstand von etwa einem Zentimeter zur Salami 1 befindet.

Nachdem die Hülle 1a der Salami 1 aufgebläht ist, wird das der Reifeschlaufe 1 b abgewandte Ende 1c der Salami 1 mittels eines als Kreissäge 6 ausgebildeten dritten Elements 6 abgeschnitten. Hierdurch rutscht die Salami 1 nach unten aus der Pelle 1a, welche mit ihrer Reifeschlaufe 1b am Seil 10 hängen bleibt.

Unterhalb des Mantelelements 3a, 3b ist ein Transportband 11 angeordnet, auf das die Salami 1 fällt. Mittels des Transportbands 11 läßt sich die entpellte Salami 1 einer weiteren Verarbeitung zuführen.

## Patentansprüche

1. Verfahren zum Entfernen einer einen Gegenstand (1) umschließenden Hülle (1a), insbesondere zum Entfernen einer Pelle (1a) von einer Salami (1),
**dadurch gekennzeichnet,**
**daß** der umhüllte Gegenstand (1) vor dem Entfernen der Hülle (1a) mit Ultraschall behandelt wird.

2. Verfahren nach Anspruch 1,
**dadurch gekennzeichnet,**
**daß** der umhüllte Gegenstand (1) vor dem Entfernen der Hülle (1a) in ein Ultraschallbad (2) getaucht wird.

3. Verfahren nach einem der Ansprüche 1 oder 2,
**dadurch gekennzeichnet,**
**daß** die Ultraschallbehandlung etwa 100 Sekunden erfolgt.

4. Verfahren nach einem der Ansprüche 1 bis 3,
**dadurch gekennzeichnet,**
**daß** nach der Ultraschallbehandlung zwischen den umhüllten Gegenstand (1) und der Hülle (1a) ein Medium eingebracht wird.

5. Verfahren nach Anspruch 4,
**dadurch gekennzeichnet,**
**daß** das Medium mittels Injektionsnadeln (5) zwischen den Gegenstand (1) und die Hülle (1a) gebracht wird.

6. Vorrichtung zum Entfernen einer einen Gegenstand (1) umschließenden Hülle (1a), insbesondere zum Entfernen einer Pelle (1a) von einer Salami (1),
**dadurch gekennzeichnet,**
**daß** eine Anordnung vorhanden ist, mittels der der umhüllte Gegenstand (1) vor dem Entfernen der Hülle (1a) mit Ultraschall behandelt wird.

7. Vorrichtung nach Anspruch 6,
**dadurch gekennzeichnet,**
**daß** die Anordnung (2) ein Element (8, 9, 10) aufweist, mittels dem der umhüllte Gegenstand (1) vor dem Entfernen der Hülle (1a) in ein Ultraschallbad (2) getaucht wird.

8. Vorrichtung nach Anspruch 6 oder 7,
**dadurch gekennzeichnet,**
**daß** ein Element (5) zum Einbringen eines Mediums zwischen den umhüllten Gegenstand (1) und der Hülle (1a) vorhanden ist.

9. Vorrichtung nach einem der Ansprüche 6 bis 8,
**dadurch gekennzeichnet,**
**daß** ein Mantelelement (3a, 3b) vorhanden ist, welches einen Hohlraum hat, in den der umhüllte Gegenstand (1) einbringbar ist, und dessen Wandungen (4a, 4b) zum umhüllten Gegenstand (1) einen vorbestimmten Abstand haben.

10. Vorrichtung nach Anspruch 9,
**dadurch gekennzeichnet,**
**daß** das Mantelelement (3a, 3b) aus zwei Halbschalen (3a, 3b) besteht.

11. Vorrichtung nach einem der Ansprüche 6 bis 10,
**dadurch gekennzeichnet,**
**daß** das Element (5) zum Einbringen des Mediums zwischen den umhüllten Gegenstand und der Hülle (1a) als Injektionsnadel (5) ausgebildet ist, mittels welcher wenigstens die Hülle (1a) durchstechbar ist, und mittels welcher das Medium unter die Hülle (1a) bringbar ist.

12. Vorrichtung nach einem der Ansprüche 6 bis 11,
**dadurch gekennzeichnet,**
**daß** ein Trennelement (6) vorhanden ist, mittels welchem die Hülle (1) durchtrennbar ist.
